# EUROPÄISCHE PATENTSCHRIFT

(11) **EP 3 839 446 B1**
(45) Veröffentlichungstag und Bekanntmachung des Hinweises auf die Patenterteilung: **13.03.2024**
(21) Anmeldenummer: 19216523.1
(22) Anmeldetag: 16.12.2019
(51) Int. Cl.: G01F 1/661, A01D 34/90, A01G 3/053, B23D 59/00, B27B 17/00, G01F 23/292, B25F 5/00, G01F 1/66

(54) **OPTISCHER BETRIEBSFLÜSSIGKEITSDETEKTOR ZUR OPTISCHEN DETEKTION VON BETRIEBSFLÜSSIGKEIT FÜR EIN HANDGEFÜHRTES GARTEN-, FORST- UND/ODER BAUBEARBEITUNGSGERÄT UND HANDGEFÜHRTES GARTEN-, FORST- UND/ODER BAUBEARBEITUNGSGERÄT**
HAND GUIDED GARDEN, FORESTRY AND / OR CONSTRUCTION DEVICE AND OPTICAL OPERATING LIQUID DETECTOR FOR OPTICALLY DETECTING OPERATING FLUID FOR A HAND-GUIDED GARDEN, FORESTRY AND / OR CONSTRUCTION DEVICE
DÉTECTEUR OPTIQUE DE LIQUIDE DE FONCTIONNEMENT DESTINÉ À LA DÉTECTION OPTIQUE D'UN LIQUIDE DE FONCTIONNEMENT POUR UN APPAREIL PORTATIF DE TRAITEMENT DE JARDINAGE, FORESTIER ET/OU DE CONSTRUCTION ET APPAREIL PORTATIF DE TRAITEMENT DE JARDINAGE, FORESTIER ET/OU DE CONSTRUCTION

(43) Veröffentlichungstag der Anmeldung: 23.06.2021
(73) Patentinhaber: Andreas Stihl AG & Co. KG, 71336 Waiblingen (DE)
(72) Erfinder: HAAS, Alexander, 73565 Spraitbach (DE); PULFER, Michael, 9535 Wilen bei Wil (DE)
(74) Vertreter: Patentanwälte Ruff, Wilhelm, Beier, Dauster & Partner mbB

(56) Entgegenhaltungen:
- EP-A2- 0 238 809
- DE-A1- 3 910 250
- DE-B- 1 119 532
- DE-U1- 8 627 669
- DE-U1-202007 017 548
- JP-A- S 613 034

## Beschreibung

### ANWENDUNGSGEBIET UND STAND DER TECHNIK

Die Erfindung bezieht sich auf einen optischen Betriebsflüssigkeitsdetektor zur optischen Detektion von Betriebsflüssigkeit für ein handgeführtes Garten-, Forst- und/oder Baubearbeitungsgerät und ein handgeführtes Garten-, Forst- und/oder Baubearbeitungsgerät aufweisend einen solchen optischen Betriebsflüssigkeitsdetektor.

Die DE 20 2007 017 548 US offenbart eine Kettensäge, umfassend ein Gehäuse, eine Antriebsvorrichtung, welche in dem Gehäuse enthalten ist, eine Sägenkette, welche durch die Antriebsvorrichtung angetrieben wird, und ein Schmierungssystem, welches einen Schmiermitteltank, eine Pumpe, welche mit dem Schmiermitteltank verbunden ist, und ein Schmiermittel-Alarmsystem umfasst. Das Schmiermittel-Alarmsystem umfasst einen lichtempfindlichen Detektor, welcher eine Lichtquelle und ein lichtempfindliches Element, welche einander gegenüber angeordnet sind, umfasst, wobei das lichtempfindliche Element in der Lage ist, Licht, welches von der Lichtquelle emittiert wird, zu empfangen und demgemäß ein entsprechendes Signal auszusenden.

### AUFGABE UND LÖSUNG

Der Erfindung liegt als Aufgabe die Bereitstellung eines optischen Betriebsflüssigkeitsdetektors zur optischen Detektion von Betriebsflüssigkeit für ein handgeführtes Garten-, Forst- und/oder Baubearbeitungsgerät, wobei der Betriebsflüssigkeitsdetektor verbesserte Eigenschaften aufweist, und eines handgeführten Garten-, Forst- und/oder Baubearbeitungsgerät aufweisend einen solchen optischen Betriebsflüssigkeitsdetektor zugrunde.

Die Erfindung löst die Aufgabe durch die Bereitstellung eines optischen Betriebsflüssigkeitsdetektors mit den Merkmalen des Anspruchs 1 und eines handgeführten Garten-, Forst- und/oder Baubearbeitungsgeräts mit den Merkmalen des Anspruchs 15. Vorteilhafte Weiterbildungen und/oder Ausgestaltungen der Erfindung sind in den abhängigen Ansprüchen beschrieben.

Der erfindungsgemäße, insbesondere elektrische, optische Betriebsflüssigkeitsdetektor ist zur, insbesondere automatischen, optischen Detektion von Betriebsflüssigkeit für ein handgeführtes Garten-, Forst- und/oder Baubearbeitungsgerät ausgebildet bzw. konfiguriert. Der Betriebsflüssigkeitsdetektor weist eine, insbesondere elektrische, Lichtquelle, eine Betriebsflüssigkeitsleitung und einen, insbesondere elektrischen, Lichtempfänger auf. Die Lichtquelle ist zur, insbesondere automatischen, Abstrahlung bzw. Aussendung von Lichtstrahlen ausgebildet bzw. konfiguriert. Die Betriebsflüssigkeitsleitung ist zur optischen Wechselwirkung von, abgestrahlten, Lichtstrahlen von der Lichtquelle mit Betriebsflüssigkeit, soweit anwesend, in der Betriebsflüssigkeitsleitung zur optischen Detektion von, insbesondere der, Betriebsflüssigkeit ausgebildet bzw. konfiguriert. Der Lichtempfänger ist zum, insbesondere automatischen, verschiedenen Empfang von, insbesondere wechselgewirkten, Lichtstrahlen von der Betriebsflüssigkeitsleitung in Abhängigkeit von, insbesondere entweder, der Anwesenheit oder der Abwesenheit von Betriebsflüssigkeit in der Betriebsflüssigkeitsleitung ausgebildet bzw. konfiguriert.

Zusätzlich weist der Betriebsflüssigkeitsdetektor mindestens eine optische Umlenkungseinrichtung auf. Die mindestens eine Umlenkungseinrichtung ist zur Umlenkung, insbesondere Richtungsumlenkung, von, insbesondere abgestrahlten, Lichtstrahlen von der Lichtquelle zu der Betriebsflüssigkeitsleitung und/oder zur Umlenkung, insbesondere Richtungsumlenkung, von, insbesondere wechselgewirkten, Lichtstrahlen von der Betriebsflüssigkeitsleitung zu dem Lichtempfänger ausgebildet bzw. konfiguriert.

Zusätzlich ist die Betriebsflüssigkeitsleitung, insbesondere eine Innenfläche der Betriebsflüssigkeitsleitung, zur verschiedenen Ablenkung, insbesondere Richtungsablenkung, von, insbesondere abgestrahlten, Lichtstrahlen von der Lichtquelle in Abhängigkeit von der Anwesenheit oder der Abwesenheit von Betriebsflüssigkeit in der Betriebsflüssigkeitsleitung zur optischen Detektion von Betriebsflüssigkeit ausgebildet bzw. konfiguriert, insbesondere ausgerichtet und/oder geformt.

Dies, insbesondere die optische Detektion von Betriebsflüssigkeit, ermöglicht einem Benutzer wahrzunehmen, ob Betriebsflüssigkeit anwesend oder abwesend ist.

Zusätzlich ermöglicht dies, insbesondere die mindestens eine Umlenkungseinrichtung, Freiheiten zu einer räumlichen Anordnung und/oder einer Ausrichtung der Lichtquelle, der Betriebsflüssigkeitsleitung und des Lichtempfängers zueinander. Insbesondere brauchen oder können die Lichtquelle, die Betriebsflüssigkeitsleitung und der Lichtempfänger nicht in dieser Reihenfolge auf einer Geraden räumlich angeordnet zu sein.

Zusätzlich ermöglicht dies, insbesondere die verschiedene Ablenkung, die optische Detektion von Betriebsflüssigkeit, die eine geringe oder sogar keine oder eine unbekannte Absorption von Lichtstrahlen von der Lichtquelle aufweist.

Insbesondere kann die Betriebsflüssigkeit eine Schmierflüssigkeit und/oder Öl sein.

Die Lichtquelle kann eine Leuchtdiode aufweisen, insbesondere sein.

Der Lichtempfänger kann eine Photodiode aufweisen, insbesondere sein.

Die Lichtstrahlen können eine Wellenlänge/n, die für das menschliche Auge sichtbar sind, insbesondere rot, und/oder eine kürzere Wellenlänge/n (Ultraviolett) und/oder eine größere Wellenlänge/n (Infrarot) aufweisen bzw. haben.

Die Betriebsflüssigkeitsleitung kann für Lichtstrahlen transmittierend sein, insbesondere einen Transmissionsgrad von minimal 50 Prozent (%), insbesondere und maximal 100 %, insbesondere von etwa 90 %, aufweisen bzw. haben. Dies kann die optische Wechselwirkung und den Empfang ermöglichen. Insbesondere kann die Betriebsflüssigkeitsleitung mindestens teilweise oder sogar vollständig aus einem, insbesondere transparenten und/oder thermoplastischen, Kunststoff, insbesondere PA (Polyamid) und/oder PMMA (Polymethylmethacrylat), insbesondere Grilamid TR90, bestehen. Zusätzlich oder alternativ kann die Betriebsflüssigkeitsleitung ein Rohr aufweisen, insbesondere sein. Weiter zusätzlich oder alternativ kann die Betriebsflüssigkeitsleitung eine runde und/oder zylindrische Innenform aufweisen bzw. haben. Weiter zusätzlich oder alternativ kann ein Innendurchmesser der Betriebsflüssigkeitsleitung minimal 1 Millimeter (mm), insbesondere minimal 2 mm, und/oder maximal 10 mm, insbesondere maximal 5 mm, insbesondere 3 mm, sein. Weiter zusätzlich oder alternativ kann bei der Abwesenheit von Betriebsflüssigkeit Luft in der Betriebsflüssigkeitsleitung anwesend sein.

Der Empfang kann zwischen der Anwesenheit oder der Abwesenheit um einen Faktor von minimal 2, insbesondere minimal 4, insbesondere und maximal 100, verschieden sein.

Die Umlenkung kann um minimal 45 Grad (°) und/oder maximal 180 °, insbesondere 90 °, sein. Zusätzlich oder alternativ kann die mindestens eine Umlenkungseinrichtung von der Lichtquelle, der Betriebsflüssigkeitsleitung und/oder dem Lichtempfänger verschieden sein. Weiter zusätzlich oder alternativ braucht oder kann die mindestens eine Umlenkungseinrichtung nicht eine Linse zu sein.

Die Ablenkung kann, insbesondere im Mittel, um minimal 5 ° und/oder maximal 20 °, insbesondere 10 °, verschieden sein. Zusätzlich oder alternativ braucht oder kann die Betriebsflüssigkeitsleitung nicht zur Ablenkung entweder bei der Anwesenheit oder bei der Abwesenheit ausgebildet sein.

Der Betriebsflüssigkeitsdetektor kann eine, insbesondere elektrische, Ausgabeeinrichtung aufweisen. Die Ausgabeeinrichtung kann zur, automatischen, Ausgabe eines, insbesondere benutzerwahrnehmbaren und/oder elektrischen, Detektionssignals und/oder eines, insbesondere benutzerwahrnehmbaren und/oder elektrischen, Nichtdetektionssignals in Abhängigkeit des, insbesondere verschiedenen, Empfangs ausgebildet sein.

In einer Weiterbildung der Erfindung ist die mindestens eine Umlenkungseinrichtung zur Umlenkung basierend auf Reflexion ausgebildet bzw. konfiguriert. Insbesondere ist die mindestens eine Umlenkungseinrichtung mindestens ein Spiegel, insbesondere mindestens ein konkaver Spiegel, insbesondere mindestens ein Parabolspiegel. Insbesondere kann die mindestens eine Umlenkungseinrichtung einen Reflexionsgrad von minimal 50 %, insbesondere und maximal 100 %, aufweisen bzw. haben.

In einer Weiterbildung der Erfindung weist der Betriebsflüssigkeitsdetektor einen, insbesondere einstückigen, optischen Körper auf. Der Körper weist die Betriebsflüssigkeitsleitung und die mindestens eine Umlenkungseinrichtung auf. Dies ermöglicht wenige Teile und/oder eine definierte räumliche Anordnung und/oder eine definierte Ausrichtung der Betriebsflüssigkeitsleitung und der mindestens einen Umlenkungseinrichtung zueinander. Dies ermöglicht eine einfache Montage des Betriebsflüssigkeitsdetektors. Insbesondere kann der Körper für Lichtstrahlen transmittierend sein, insbesondere einen Transmissionsgrad von minimal 50 %, insbesondere und maximal 100 %, insbesondere von etwa 90 %, aufweisen bzw. haben. Insbesondere kann der Körper mindestens teilweise oder sogar vollständig aus einem, insbesondere transparenten und/oder thermoplastischen, Kunststoff, insbesondere PA (Polyamid) und/oder PMMA (Polymethylmethacrylat), insbesondere Grilamid TR90, bestehen.

Zusätzlich oder alternativ kann die Betriebsflüssigkeitsleitung im Inneren des Körpers räumlich angeordnet sein.

In einer Ausgestaltung der Erfindung weist die mindestens eine Umlenkungseinrichtung an mindestens einer Stelle einer Oberfläche des Körpers eine Reflexionsbeschichtung, insbesondere zur Umlenkung basierend auf Reflexion, auf. Dies ermöglicht eine einfache Herstellung der mindestens einen Umlenkungseinrichtung, insbesondere mittels Aufdampfens der Reflexionsbeschichtung. Insbesondere kann die mindestens eine Umlenkungseinrichtung an mindestens einer Stelle einer Oberfläche des Körpers eine Reflexionsbeschichtung sein. Zusätzlich oder alternativ kann die Reflexionsbeschichtung mindestens teilweise oder sogar vollständig aus Metall bestehen.

In einer Weiterbildung der Erfindung weist der Betriebsflüssigkeitsdetektor eine, insbesondere elektrische, Leiterplatte auf. Die Leiterplatte trägt die Lichtquelle und den Lichtempfänger, insbesondere und die Betriebsflüssigkeitsleitung und/oder die mindestens eine Umlenkungseinrichtung, soweit vorhanden, insbesondere den Körper, soweit vorhanden. Die Lichtquelle ist zur Abstrahlung von Lichtstrahlen, insbesondere orthogonal, von einer Plattenebene der Leiterplatte weg ausgerichtet. Der Lichtempfänger ist zum Empfang von Lichtstrahlen von der Betriebsflüssigkeitsleitung, insbesondere orthogonal, zu der Plattenebene ausgerichtet. Dies ermöglicht eine räumliche Anordnung der Lichtquelle und des Lichtempfängers jeweils mit einer Großfläche auf der Leiterplatte bzw. ein Liegen der Lichtquelle und des Lichtempfängers jeweils auf der Leiterplatte. Insbesondere brauchen oder können die Lichtquelle und der Lichtempfänger jeweils nicht auf der Leiterplatte zu stehen. Insbesondere kann von der Plattenebene weg und/oder zu der Plattenebene nicht-parallel zu der Plattenebene und/oder unter einem Winkel von minimal 45 °, insbesondere und maximal 90 °, zu der Plattenebene bedeuten. Zusätzlich oder alternativ können die Lichtquelle und der Lichtempfänger, insbesondere und die Betriebsflüssigkeitsleitung und/oder die mindestens eine Umlenkungseinrichtung, insbesondere der Körper, auf einer selben Seite der Leiterplatte und/oder unmittelbar bzw. ohne Abstand auf der Leiterplatte räumlich angeordnet sein.

In einer Weiterbildung der Erfindung ist die Betriebsflüssigkeitsleitung derart ausgerichtet, insbesondere zu der Lichtquelle und/oder der Umlenkungseinrichtung, soweit vorhanden, dass Lichtstrahlen von der Lichtquelle nicht-parallel, insbesondere orthogonal, zu der Betriebsflüssigkeitsleitung, insbesondere einer Längsachse der Betriebsflüssigkeitsleitung, auf die Betriebsflüssigkeitsleitung, insbesondere eine Innenfläche der Betriebsflüssigkeitsleitung, treffen. Dies ermöglicht die verschiedene Ablenkung. Insbesondere kann nicht-parallel unter einem Winkel von minimal 45 °, insbesondere und maximal 90 °, zu der Betriebsflüssigkeitsleitung bedeuten.

In einer Weiterbildung der Erfindung ist die Betriebsflüssigkeitsleitung, insbesondere eine, insbesondere die, Innenfläche der Betriebsflüssigkeitsleitung, zur verschiedenen Brechung von, insbesondere abgestrahlten, Lichtstrahlen von der Lichtquelle in Abhängigkeit von der Anwesenheit oder der Abwesenheit von Betriebsflüssigkeit in der Betriebsflüssigkeitsleitung zur optischen Detektion von, insbesondere der, Betriebsflüssigkeit ausgebildet bzw. konfiguriert, insbesondere ausgerichtet und/oder, insbesondere rund, geformt. Dies ermöglicht die optische Detektion von Betriebsflüssigkeit, die eine geringe oder sogar keine oder eine unbekannte Absorption von Lichtstrahlen von der Lichtquelle aufweist, Insbesondere kann die Brechung, insbesondere im Mittel, um minimal 5 ° und/oder maximal 20 °, insbesondere 10 °, verschieden sein. Zusätzlich oder alternativ braucht oder kann die Betriebsflüssigkeitsleitung nicht zur Brechung entweder bei der Anwesenheit oder bei der Abwesenheit ausgebildet sein.

In einer Ausgestaltung der Erfindung ist ein Brechungsindex der Betriebsflüssigkeitsleitung, insbesondere einer Wandung der Betriebsflüssigkeitsleitung, insbesondere des Körpers, soweit vorhanden, größer als 1, insbesondere minimal 1,3, insbesondere und maximal 3, insbesondere 1,5, und/oder ähnlich, insbesondere gleich, einem Brechungsindex von, insbesondere der, Betriebsflüssigkeit. Dies ermöglicht die verschiedene Brechung. Insbesondere ist ein Brechungsindex von Luft 1. Zusätzlich oder alternativ kann der Brechungsindex von Betriebsflüssigkeit, insbesondere Schmierflüssigkeit und/oder Öl, minimal 1,3, insbesondere und maximal 3, insbesondere 1,5, sein.

In einer Weiterbildung der Erfindung ist der Betriebsflüssigkeitsdetektor derart ausgebildet bzw. konfiguriert, dass der Lichtempfänger bei der Anwesenheit von Betriebsflüssigkeit in der Betriebsflüssigkeitsleitung mehr Lichtstrahlen von der Betriebsflüssigkeitsleitung empfängt als bei der Abwesenheit von Betriebsflüssigkeit in der Betriebsflüssigkeitsleitung.

In einer Weiterbildung der Erfindung ist der Lichtempfänger zur, insbesondere automatischen, Messung einer Intensität, insbesondere eines Intensitätswerts der Intensität, der empfangenen Lichtstrahlen ausgebildet bzw. konfiguriert. Der Betriebsflüssigkeitsdetektor weist eine, insbesondere die und/oder elektrische, Ausgabeeinrichtung auf. Die Ausgabeeinrichtung ist bei Erreichung und/oder Überschreitung eines Detektionsintensitätsgrenzwerts durch die gemessene Intensität zur, insbesondere automatischen, Ausgabe eines, insbesondere benutzerwahrnehmbaren und/oder elektrischen, Detektionssignals und/oder bei Unterschreitung eines Nichtdetektionsintensitätsgrenzwerts durch die gemessene Intensität zur, insbesondere automatischen, Ausgabe eines, insbesondere benutzerwahrnehmbaren und/oder elektrischen, Nichtdetektionssignals ausgebildet bzw. konfiguriert. Insbesondere können der Detektionsintensitätsgrenzwert und der Nichtdetektionsintensitätsgrenzwert verschieden sein. Insbesondere kann der Detektionsintensitätsgrenzwert größer als der Nichtdetektionsintensitätsgrenzwert. Dies kann ermöglichen zu vermeiden, dass kleine und/oder wenige Luftblasen in Betriebsflüssigkeit in der Betriebsflüssigkeitsleitung und/oder kleine und/oder wenige Betriebsflüssigkeitstropfen in Luft in der Betriebsflüssigkeitsleitung die Ausgabe hin- und herspringen, insbesondere blinken, lassen. Zusätzlich oder alternativ können das Detektionssignal und das Nichtdetektionssignal verschieden sein. Weiter zusätzlich oder alternativ kann die Ausgabe optisch, akustisch und/oder haptisch sein.

In einer Weiterbildung der Erfindung weist der Betriebsflüssigkeitsdetektor eine, insbesondere die und/oder elektrische, Ausgabeeinrichtung auf. Die Ausgabeeinrichtung ist zur, insbesondere automatischen, Ausgabe eines, insbesondere des und/oder benutzerwahrnehmbaren und/oder elektrischen, Detektionssignals bei, insbesondere kontinuierlicher, Detektion von Betriebsflüssigkeit für eine erste Mindestzeitdauer und/oder zur, insbesondere automatischen, Ausgabe eines, insbesondere des und/oder benutzerwahrnehmbaren und/oder elektrischen, Nichtdetektionssignals bei, insbesondere kontinuierlicher, Nichtdetektion von Betriebsflüssigkeit für eine zweite Mindestzeitdauer ausgebildet bzw. konfiguriert. Dies ermöglicht zu vermeiden, dass kleine und/oder wenige Luftblasen in Betriebsflüssigkeit in der Betriebsflüssigkeitsleitung und/oder kleine und/oder wenige Betriebsflüssigkeitstropfen in Luft in der Betriebsflüssigkeitsleitung die Ausgabe hin- und herspringen, insbesondere blinken, lassen. Insbesondere können die erste Mindestzeitdauer und die zweite Mindestzeitdauer verschieden sein. Zusätzlich oder alternativ können das Detektionssignal und das Nichtdetektionssignal verschieden sein. Weiter zusätzlich oder alternativ kann die Ausgabe optisch, akustisch und/oder haptisch sein.

In einer Weiterbildung der Erfindung ist der Betriebsflüssigkeitsdetektor derart ausgebildet bzw. konfiguriert, dass bei, insbesondere fehlerfrei, abstrahlender Lichtquelle der, insbesondere fehlerfreie, Lichtempfänger bei der Anwesenheit und bei der Abwesenheit von Betriebsflüssigkeit in der, insbesondere fehlerfreien, Betriebsflüssigkeitsleitung Lichtstrahlen, insbesondere von der Lichtquelle, empfängt. Der Betriebsflüssigkeitsdetektor weist eine, insbesondere die und/oder automatische, Ausgabeeinrichtung auf. Die Ausgabeeinrichtung ist bei Nichtempfang zur, insbesondere automatischen, Ausgabe eines, insbesondere benutzerwahrnehmbaren und/oder elektrischen, Fehlersignals ausgebildet bzw. konfiguriert.

Dies ermöglicht zu erkennen, ob die Lichtquelle, der Betriebsflüssigkeitsleitung und/oder der Lichtempfänger, insbesondere und/oder die mindestens eine Umlenkungseinrichtung, soweit vorhanden, insbesondere der Körper, soweit vorhanden, fehlerfrei oder fehlerhaft sind/ist. Insbesondere kann Nichtempfang Unterschreitung eines Fehlerintensitätsgrenzwerts durch die gemessene Intensität bedeuten, insbesondere wobei der Fehlerintensitätsgrenzwert kleiner als der Nichtdetektionsintensitätsgrenzwert, soweit vorhanden, sein kann. Zusätzlich oder alternativ kann das Fehlersignal von dem Detektionssignal, soweit vorhanden, und/oder dem Nichtdetektionssignal, soweit vorhanden, verschieden sein. Weiter zusätzlich oder alternativ kann die Ausgabe optisch, akustisch und/oder haptisch sein.

In einer Weiterbildung der Erfindung ist bzw. verläuft die Betriebsflüssigkeitsleitung gerade, insbesondere von einem Leitungseinlass, insbesondere inklusive, bis zu einem Leitungsauslass, insbesondere inklusive, der Betriebsflüssigkeitsleitung. Dies ermöglicht einen Druckverlust verursacht durch die Betriebsflüssigkeitsleitung gering zu halten.

In einer Weiterbildung, insbesondere einer Ausgestaltung, der Erfindung weist der Betriebsflüssigkeitsdetektor eine Abdichtungsmasse auf. Die Abdichtungsmasse schützt die Lichtquelle und/oder den Lichtempfänger und/oder die mindestens eine Umlenkungseinrichtung, soweit vorhanden, insbesondere den Körper, soweit vorhanden, und/oder die Leiterplatte, soweit vorhanden, und/oder die Ausgabeeinrichtung, soweit vorhanden, insbesondere gegen Witterungseinflüsse, wie z.B. Schmutz, Wasser und Feuchtigkeit.

Das erfindungsgemäße handgeführte Garten-, Forst- und/oder Baubearbeitungsgerät weist einen Betriebsflüssigkeitstank, eine Betriebsflüssigkeitspumpe und einen, insbesondere den, optischen Betriebsflüssigkeitsdetektor wie zuvor beschrieben auf. Der Betriebsflüssigkeitstank ist zur Bevorratung von Betriebsflüssigkeit ausgebildet bzw. konfiguriert. Die Betriebsflüssigkeitspumpe ist zur, insbesondere automatischen, Förderung von Betriebsflüssigkeit aus dem Betriebsflüssigkeitstank ausgebildet bzw. konfiguriert. Die Betriebsflüssigkeitsleitung ist nach dem Betriebsflüssigkeitstank, insbesondere und, insbesondere entweder, vor oder nach die Betriebsflüssigkeitspumpe, geschaltet.

Dies, insbesondere der Betriebsflüssigkeitsdetektor, ermöglicht zu erkennen, ob in dem Betriebsflüssigkeitstank Betriebsflüssigkeit anwesend oder abwesend ist und somit ob in den Betriebsflüssigkeitstank Betriebsflüssigkeit gefüllt werden braucht oder nicht. Insbesondere kann die Schaltung vor die Betriebsflüssigkeitspumpe ermöglichen, einen Abstand zu dem Betriebsflüssigkeitstank gering zu halten und somit nachgefüllte Betriebsflüssigkeit schnell zu erkennen bzw. zu detektieren und/oder eine Beschädigung des Betriebsflüssigkeitsdetektors verursacht durch eine mögliche Verstopfung nach der Betriebsflüssigkeitspumpe zu vermeiden. Alternativ kann die Schaltung nach die Betriebsflüssigkeitspumpe Bauraumvorteile ermöglichen und/oder nutzen.

Insbesondere kann das Garten-, Forst- und/oder Baubearbeitungsgerät ein bodengeführtes oder handgetragenes Garten-, Forst- und/oder Baubearbeitungsgerät sein. Zusätzlich oder alternativ kann handgeführtes, insbesondere handgetragenes, Garten-, Forst- und/oder Baubearbeitungsgerät bedeuten, dass das Garten-, Forst- und/oder Baubearbeitungsgerät eine maximale Masse von 50 Kilogramm (kg), insbesondere von 20 kg, insbesondere von 10 kg, aufweisen kann.

Das Garten-, Forst- und/oder Baubearbeitungsgerät kann einen Antriebsmotor aufweisen. Zusätzlich oder alternativ kann das Garten-, Forst- und/oder Baubearbeitungsgerät ein Bearbeitungswerkzeug aufweisen, insbesondere wobei der Antriebsmotor zum Antrieb des Bearbeitungswerkzeugs ausgebildet sein kann. Weiter zusätzlich oder alternativ kann der Antriebsmotor zum Antrieb der Betriebsflüssigkeitspumpe ausgebildet sein. Weiter zusätzlich oder alternativ kann die Betriebsflüssigkeitspumpe zur Förderung von Betriebsflüssigkeit zu dem Bearbeitungswerkzeug, insbesondere zur Schmierung des Bearbeitungswerkzeugs mit Betriebsflüssigkeit in Form von Schmierflüssigkeit, ausgebildet sein.

Das Garten-, Forst- und/oder Baubearbeitungsgerät, insbesondere die Betriebsflüssigkeitspumpe, kann für einen Fördermenge von Betriebsflüssigkeit von minimal 1 Kubikzentimeter pro Minute (ccm/min), insbesondere minimal 3,5 ccm/min, und/oder maximal 50 ccm/min, insbesondere maximal 15 ccm/min, ausgebildet sein.

Die Betriebsflüssigkeitsleitung kann mit dem Betriebsflüssigkeitstank und/oder der Betriebsflüssigkeitspumpe und/oder dem Bearbeitungswerkzeug, soweit vorhanden, für einen Fluss von Betriebsflüssigkeit verbunden sein.

In einer Weiterbildung der Erfindung ist das Garten-, Forst- und/oder Baubearbeitungsgerät eine Säge, ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer, eine Grasschere oder ein Reinigungsgerät, wie z.B. ein Spritzgerät oder ein Hochdruckreiniger.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Perspektivansicht auf eine Oberseite eines erfindungsgemäßen optischen Betriebsflüssigkeitsdetektors mit Abdichtungsmasse,
- Fig. 2: eine Perspektivansicht auf eine Unterseite des Betriebsflüssigkeitsdetektors der Fig. 1 mit Abdichtungsmasse,
- Fig. 3: eine Längsschnittansicht des Betriebsflüssigkeitsdetektors der Fig. 1 mit Abdichtungsmasse,
- Fig. 4: eine Querschnittansicht des Betriebsflüssigkeitsdetektors der Fig. 1 mit Abdichtungsmasse,
- Fig. 5: eine Perspektivansicht auf die Oberseite des Betriebsflüssigkeitsdetektors der Fig. 1 ohne Abdichtungsmasse, insbesondere eines optischen Körpers aufweisend eine Betriebsflüssigkeitsleitung und mindestens eine Umlenkungseinrichtung des Betriebsflüssigkeitsdetektors der Fig. 1,
- Fig. 6: eine Perspektivansicht auf die Unterseite des Betriebsflüssigkeitsdetektors der Fig. 1 ohne Abdichtungsmasse in Explosionsdarstellung, insbesondere den optischen Körper und eine Leiterplatte des Betriebsflüssigkeitsdetektors der Fig. 1,
- Fig. 7: eine Perspektivansicht der Leiterplatte der Fig. 6 tragend eine Lichtquelle und einen Lichtempfänger des Betriebsflüssigkeitsdetektors der Fig. 1,
- Fig. 8: eine Perspektivansicht auf die Unterseite des Betriebsflüssigkeitsdetektors der Fig. 1 ohne Abdichtungsmasse und ohne die Leiterplatte, insbesondere des Körpers,
- Fig. 9: eine schematische Ansicht einer optischen Funktion des Betriebsflüssigkeitsdetektors der Fig. 1,
- Fig. 10: eine schematische Ansicht einer optischen Funktion eines weiteren nichterfindungsgemäßen optischen Betriebsflüssigkeitsdetektors,
- Fig. 11: eine schematische Ansicht einer elektrischen und/oder logischen Funktion des Betriebsflüssigkeitsdetektors der Fig. 1 und der Fig. 10,
- Fig. 12: eine schematische Ansicht eines erfindungsgemäßen handgeführten Garten-, Forst- und/oder Baubearbeitungsgeräts aufweisend den Betriebsflüssigkeitsdetektor der Fig. 1 oder der Fig. 10, und
- Fig. 13: eine Perspektivansicht des Garten-, Forst- und/oder Baubearbeitungsgeräts der Fig. 12.

### DETAILLIERTE BESCHREIBUNG DER AUSFÜHRUNGSBEISPIELE

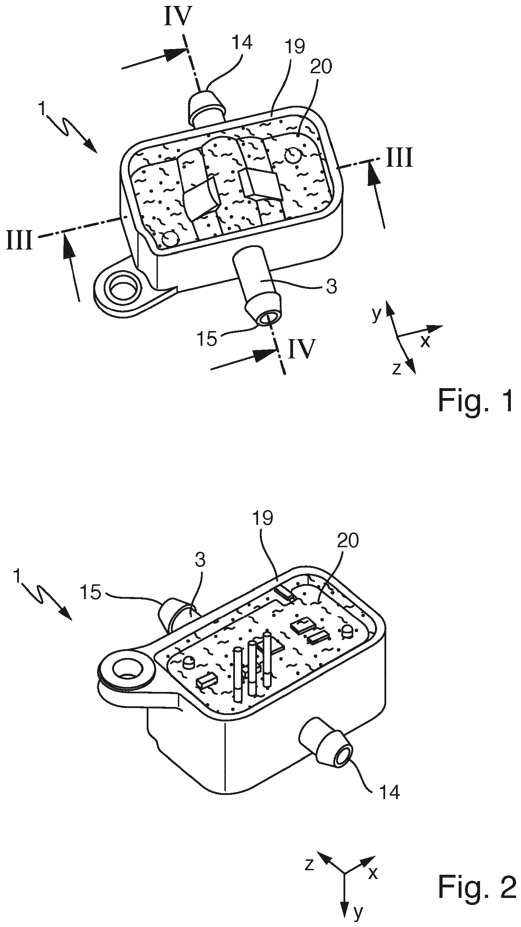

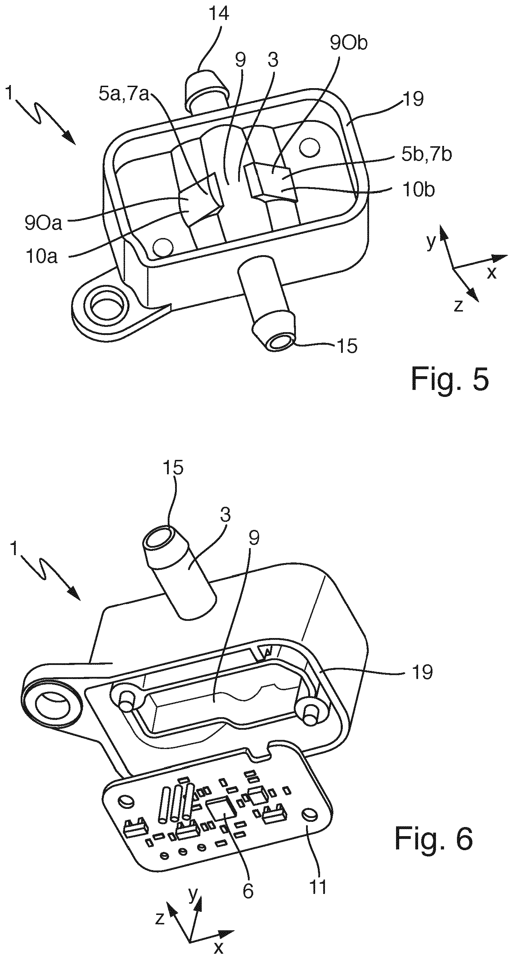

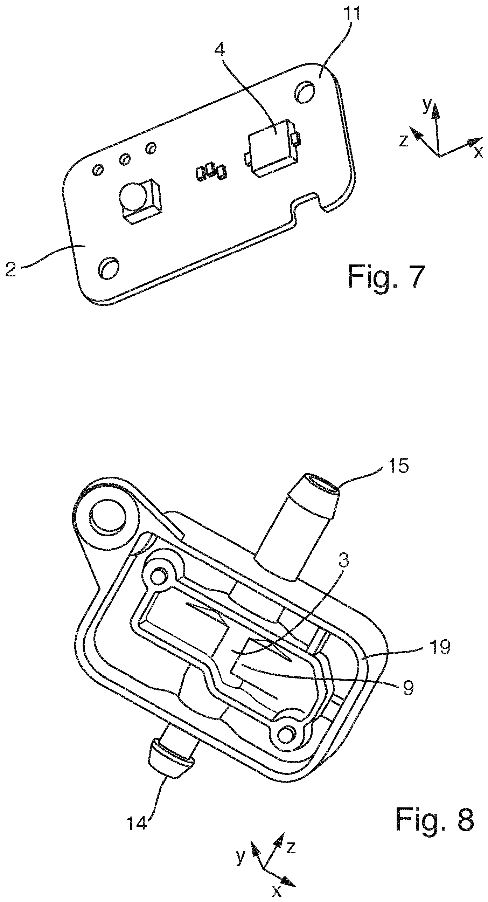

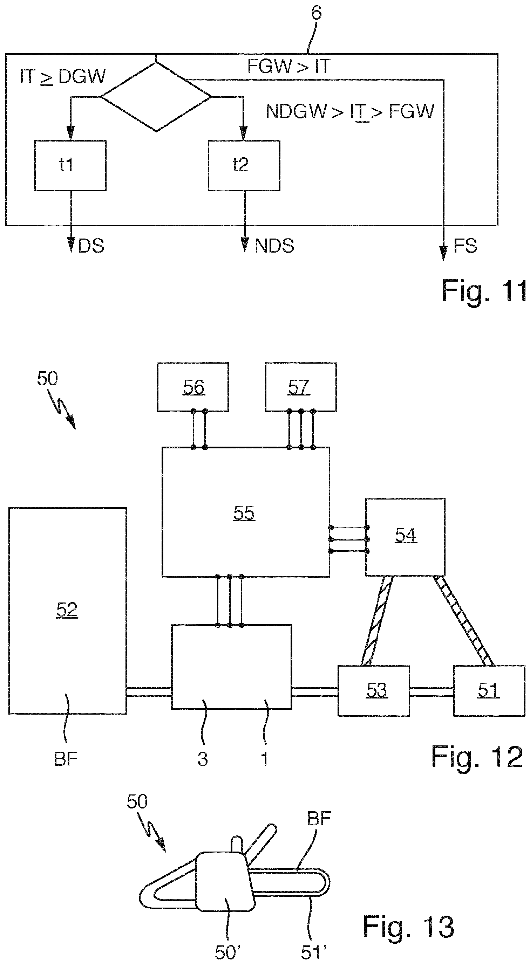

Fig. 1 bis 9 und 10 zeigen, insbesondere jeweils, einen erfindungsgemäßen optischen Betriebsflüssigkeitsdetektor 1 zur optischen Detektion von Betriebsflüssigkeit BF für ein handgeführtes Garten-, Forst- und/oder Baubearbeitungsgerät 50, wie in Fig. 12 und 13 gezeigt. Der Betriebsflüssigkeitsdetektor 1 weist eine Lichtquelle 2, eine Betriebsflüssigkeitsleitung 3 und einen Lichtempfänger 4 auf. Die Lichtquelle 2 ist zur Abstrahlung von Lichtstrahlen aLS ausgebildet. Die Betriebsflüssigkeitsleitung 3 ist zur optischen Wechselwirkung von Lichtstrahlen aLS von der Lichtquelle 2 mit Betriebsflüssigkeit BF in der Betriebsflüssigkeitsleitung 3 zur optischen Detektion von Betriebsflüssigkeit BF ausgebildet. Der Lichtempfänger 4 ist zum verschiedenen Empfang von Lichtstrahlen tLS von der Betriebsflüssigkeitsleitung 3 in Abhängigkeit von der Anwesenheit oder der Abwesenheit von Betriebsflüssigkeit BF in der Betriebsflüssigkeitsleitung 3 ausgebildet.

Zusätzlich weist in dem Ausführungsbeispiel gezeigt in Fig. 1 bis 9 der Betriebsflüssigkeitsdetektor 1 mindestens eine optische Umlenkungseinrichtung 5a, 5b auf. Die mindestens eine Umlenkungseinrichtung 5a, 5b ist zur Umlenkung von Lichtstrahlen aLS von der Lichtquelle 2, insbesondere in Richtung y, zu der Betriebsflüssigkeitsleitung 3, insbesondere in zu der Richtung y orthogonaler Richtung x, und/oder zur Umlenkung von Lichtstrahlen tLS von der Betriebsflüssigkeitsleitung 3, insbesondere in Richtung x, zu dem Lichtempfänger 4, insbesondere in Richtung -y, ausgebildet.

Zusätzlich ist in den gezeigten Ausführungsbeispielen die Betriebsflüssigkeitsleitung 3 zur verschiedenen Ablenkung von Lichtstrahlen aLS von der Lichtquelle 2 in Abhängigkeit von der Anwesenheit oder der Abwesenheit von Betriebsflüssigkeit BF in der Betriebsflüssigkeitsleitung 3 zur optischen Detektion von Betriebsflüssigkeit BF ausgebildet.

Insbesondere weist in dem Ausführungsbeispiel gezeigt in Fig. 1 bis 9 der Betriebsflüssigkeitsdetektor 1 zwei optische Umlenkungseinrichtungen 5a, 5b auf. Die eine Umlenkungseinrichtung 5a ist zur Umlenkung von Lichtstrahlen aLS von der Lichtquelle 2 zu der Betriebsflüssigkeitsleitung 3 ausgebildet. Die andere Umlenkungseinrichtung 5b ist zur Umlenkung von Lichtstrahlen tLS von der Betriebsflüssigkeitsleitung 3 zu dem Lichtempfänger 4 ausgebildet.

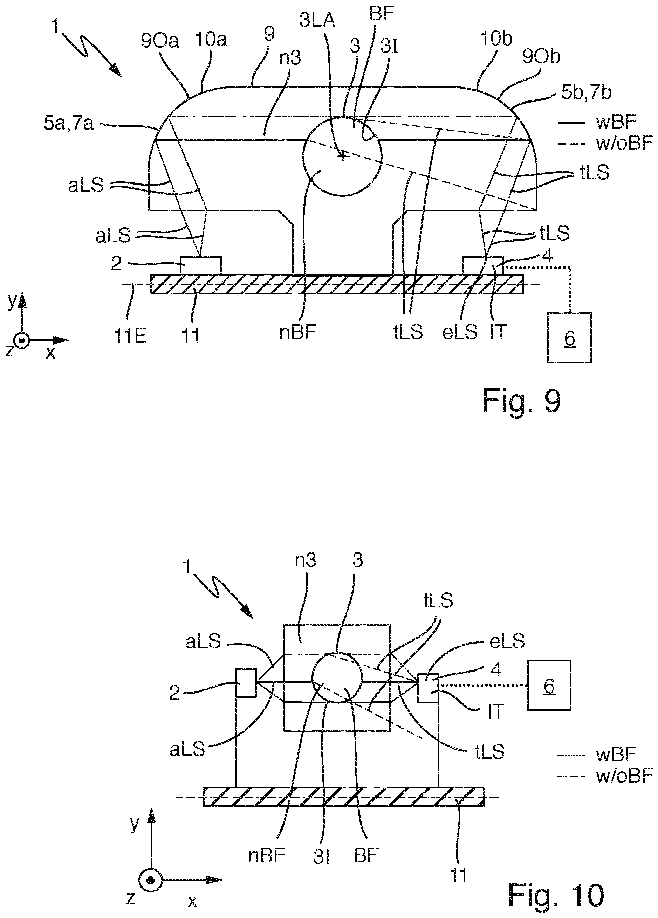

In alternativen Ausführungsbeispielen braucht oder kann der Betriebsflüssigkeitsdetektor nur eine einzige optische Umlenkungseinrichtung, wobei die Umlenkungseinrichtung entweder zur Umlenkung von Lichtstrahlen von der Lichtquelle zu der Betriebsflüssigkeitsleitung oder zur Umlenkung von Lichtstrahlen von der Betriebsflüssigkeitsleitung zu dem Lichtempfänger ausgebildet sein kann, oder sogar keine optische Umlenkungseinrichtung aufweisen, wie in Fig. 10 gezeigtem nichterfindunsggemäßen Ausführungsbeispiel.

Im Detail ist die mindestens eine Umlenkungseinrichtung 5a, 5b zur Umlenkung basierend auf Reflexion ausgebildet. Insbesondere ist die mindestens eine Umlenkungseinrichtung 5a, 5b mindestens ein Spiegel 7a, 7b, insbesondere mindestens ein konkaver Spiegel, insbesondere mindestens ein Parabolspiegel.

Des Weiteren weist in dem Ausführungsbeispiel gezeigt in Fig. 1 bis 9 der Betriebsflüssigkeitsdetektor 1 einen optischen Körper 9 auf. Der Körper 9 weist die Betriebsflüssigkeitsleitung 3 und die mindestens eine Umlenkungseinrichtung 5a, 5b auf.

Im Detail weist die mindestens eine Umlenkungseinrichtung 5a, 5b an mindestens einer Stelle einer Oberfläche 9Oa, 9Ob des Körpers 9 eine Reflexionsbeschichtung 10a, 10b auf.

Außerdem weist in den gezeigten Ausführungsbeispielen der Betriebsflüssigkeitsdetektor 1 eine Leiterplatte 11 auf. Die Leiterplatte 11 trägt die Lichtquelle 2 und den Lichtempfänger 4, insbesondere und die Betriebsflüssigkeitsleitung 3 und/oder die mindestens eine Umlenkungseinrichtung 5a, 5b, soweit vorhanden, insbesondere den Körper 9, soweit vorhanden, insbesondere auf einer selben Seite der Leiterplatte 11.

In dem Ausführungsbeispiel gezeigt in Fig. 1 bis 9 ist die Lichtquelle 2 zur Abstrahlung von Lichtstrahlen aLS, insbesondere in Richtung y, von einer Plattenebene 11E der Leiterplatte 11 weg ausgerichtet. Der Lichtempfänger 4 ist zum Empfang von Lichtstrahlen von der Betriebsflüssigkeitsleitung, insbesondere in Richtung -y, zu der Plattenebene 11E ausgerichtet. Weiter ist in den gezeigten Ausführungsbeispielen die Betriebsflüssigkeitsleitung 3 derart ausgerichtet, insbesondere zu der Lichtquelle 2 und/oder der Umlenkungseinrichtung 5a, soweit vorhanden, dass Lichtstrahlen aLS von der Lichtquelle 2 nicht-parallel, insbesondere orthogonal, zu der Betriebsflüssigkeitsleitung 3 auf die Betriebsflüssigkeitsleitung 3, insbesondere eine Innenfläche 3I der Betriebsflüssigkeitsleitung 3, treffen.

Zusammenfassend sind in dem Ausführungsbeispiel gezeigt in Fig. 1 bis 9 die eine Umlenkungseinrichtung 5a, die Betriebsflüssigkeitsleitung 3, insbesondere quer, und die andere Umlenkungseinrichtung 5b in dieser Reihenfolge auf einer Geraden, insbesondere in Richtung x, räumlich angeordnet.

In dem nichterfindungsgemäßen Ausführungsbeispiel gezeigt in Fig. 10 sind die Lichtquelle 2, die Betriebsflüssigkeitsleitung 3, insbesondere quer, und der Lichtempfänger 4 in dieser Reihenfolge auf einer Geraden, insbesondere in Richtung x, räumlich angeordnet.

Zudem ist die Betriebsflüssigkeitsleitung 3, insbesondere die Innenfläche 3I der Betriebsflüssigkeitsleitung 3, zur verschiedenen Brechung von Lichtstrahlen aLS von der Lichtquelle 2 in Abhängigkeit von der Anwesenheit oder der Abwesenheit von Betriebsflüssigkeit BF in der Betriebsflüssigkeitsleitung 3 zur optischen Detektion von Betriebsflüssigkeit BF ausgebildet, insbesondere ausgerichtet und/oder, insbesondere rund, geformt.

Im Detail ist ein Brechungsindex n3 der Betriebsflüssigkeitsleitung 3, insbesondere des Körpers 9, soweit vorhanden, größer als 1, insbesondere minimal 1,3 und/oder ähnlich einem Brechungsindex nBF von Betriebsflüssigkeit BF.

In den gezeigten Ausführungsbeispielen sind der Brechungsindex n3 und der Brechungsindex nBF jeweils 1,5.

Des Weiteren ist der Betriebsflüssigkeitsdetektor 1 derart ausgebildet, dass der Lichtempfänger 2 bei der Anwesenheit von Betriebsflüssigkeit BF in der Betriebsflüssigkeitsleitung 3 mehr Lichtstrahlen tLS von der Betriebsflüssigkeitsleitung 3 empfängt als bei der Abwesenheit von Betriebsflüssigkeit BF in der Betriebsflüssigkeitsleitung 3.

Außerdem ist der Lichtempfänger 4 zur Messung einer Intensität IT der empfangenen Lichtstrahlen eLS ausgebildet.

Weiter weist der Betriebsflüssigkeitsdetektor 1 eine Ausgabeeinrichtung 6, in den gezeigten Ausführungsbeispielen in Form eines Mikrokontrollers, auf.

Die Ausgabeeinrichtung 6 ist bei Erreichung und/oder Überschreitung eines Detektionsintensitätsgrenzwerts DGW durch die gemessene Intensität IT zur Ausgabe eines, insbesondere elektrischen, Detektionssignals DS und/oder bei Unterschreitung eines Nichtdetektionsintensitätsgrenzwerts NDGW durch die gemessene Intensität IT zur Ausgabe eines, insbesondere elektrischen, Nichtdetektionssignals NDS ausgebildet, wie in Fig. 11 gezeigt.

Im Detail ist die Ausgabeeinrichtung 6 mit dem Lichtempfänger 4 wirkverbunden, insbesondere signalverbunden, wie in Fig. 9 und 10 mittels einer gepunkteten Linie gezeigt.

In den gezeigten Ausführungsbeispielen ist der Detektionsintensitätsgrenzwert DGW größer als der Nichtdetektionsintensitätsgrenzwert NDGW.

Zusätzlich ist die Ausgabeeinrichtung 6 zur Ausgabe des Detektionssignals DS bei Detektion von Betriebsflüssigkeit BF für eine erste Mindestzeitdauer t1 und/oder zur Ausgabe des Nichtdetektionssignals NDS bei Nichtdetektion von Betriebsflüssigkeit BF für eine zweite Mindestzeitdauer t2 ausgebildet.

In den gezeigten Ausführungsbeispielen sind die erste Mindestzeitdauer t1 und die zweite Mindestzeitdauer t2 verschieden. Insbesondere ist die erste Mindestzeitdauer t1 1 Sekunde (s) und die zweite Mindestzeitdauer t2 ist 0,5 s.

Zudem ist der Betriebsflüssigkeitsdetektor 1 derart ausgebildet, dass bei abstrahlender Lichtquelle 2 der Lichtempfänger 4 bei der Anwesenheit und bei der Abwesenheit von Betriebsflüssigkeit BF in der Betriebsflüssigkeitsleitung 3 Lichtstrahlen tLS empfängt, wie in Fig. 9 und 10 gezeigt.

Die Ausgabeeinrichtung 6 ist bei Nichtempfang zur Ausgabe eines, insbesondere elektrischen, Fehlersignals FS ausgebildet, wie in Fig. 11 gezeigt.

Im Detail bedeutet Nichtempfang Unterschreitung eines Fehlerintensitätsgrenzwerts FGW durch die gemessene Intensität IT, wobei der Fehlerintensitätsgrenzwert FGW kleiner als der Nichtdetektionsintensitätsgrenzwert NDGW ist. Die Ausgabeeinrichtung 6 ist bei Unterschreitung des Nichtdetektionsintensitätsgrenzwerts NDGW und bei Erreichung und/oder Überschreitung des Fehlerintensitätsgrenzwerts FGW durch die gemessene Intensität IT zur Ausgabe des Nichtdetektionssignals NDS ausgebildet.

Des Weiteren ist die Betriebsflüssigkeitsleitung 3 gerade, insbesondere von einem Leitungseinlass 14 bis zu einem Leitungsauslass 15 der Betriebsflüssigkeitsleitung 3, insbesondere in zu der Richtung y und/oder der Richtung x orthogonaler Richtung z.

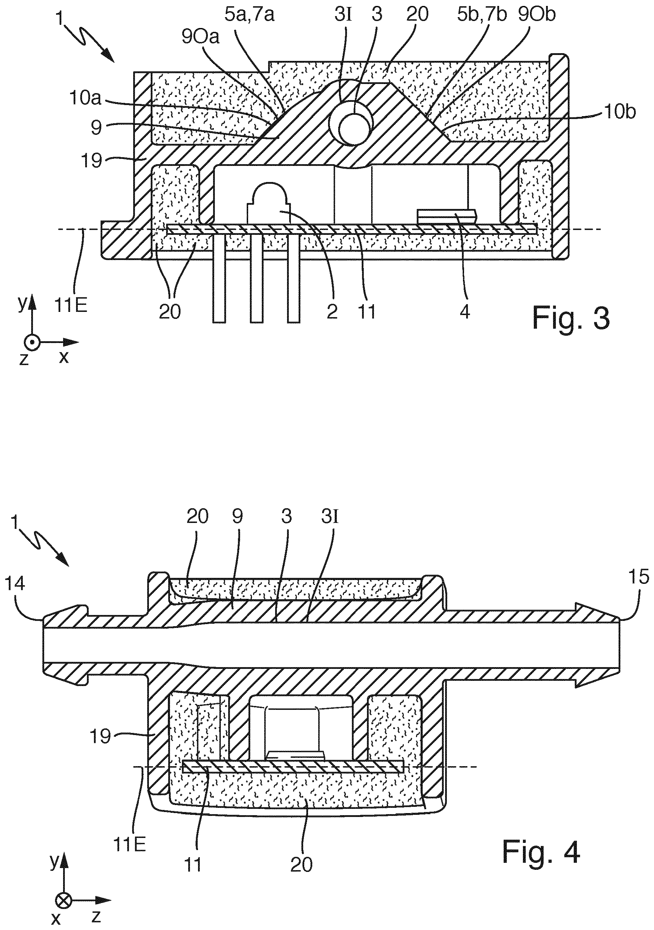

Im Detail weist die Betriebsflüssigkeitsleitung 3 an dem Leitungseinlass 14 gegenüber ihrem Rest einen kleineren Durchmesser zur Nutzung von Betriebsflüssigkeits-Schlauch-Meterware auf, wie in Fig. 4 gezeigt. Die Betriebsflüssigkeitsleitung 3 weist in ihrem Rest, insbesondere an einer Wechselwirkungsstelle mit Lichtstrahlen aLS, einen größeren Durchmesser zur Ermöglichung eines idealen Signalhubs bei kleinem Bauraum auf.

Außerdem weist der Betriebsflüssigkeitsdetektor 1 ein Gehäuse bzw. einen Vergussbecher 19 auf. In dem Gehäuse 19 sind die Lichtquelle 2, die Betriebsflüssigkeitsleitung 3 und der Lichtempfänger 4, insbesondere und die mindestens eine Umlenkungseinrichtung 5a, 5b, soweit vorhanden, insbesondere der Körper 9, soweit vorhanden, die Leiterplatte 11 und die Ausgabeeinrichtung 6, angeordnet.

In dem Ausführungsbeispiel gezeigt in Fig. 1 bis 9 ist der Körper 9 Teil des Gehäuses 19.

Im Detail weist der Körper 9 bzw. das Gehäuse 19 Pins zu einer räumlichen Anordnung und/oder einer Ausrichtung bzw. zu einer Positionierung gegenüber der Leiterplatte 11 auf.

Weiter weist der Betriebsflüssigkeitsdetektor 1 eine Abdichtungsmasse 20 auf. Die Abdichtungsmasse 20 schützt die Lichtquelle 2 und/oder den Lichtempfänger 4 und/oder die mindestens eine Umlenkungseinrichtung 5a, 5b, soweit vorhanden, insbesondere den Körper 9, soweit vorhanden, und/oder die Leiterplatte 11 und/oder die Ausgabeeinrichtung 6.

Insbesondere ist die Abdichtungsmasse 20 in Form einer Vergussmasse. Das Gehäuse 19 ist mittels der Abdichtungsmasse 20 in Form der Vergussmasse vergossen.

Zusammenfassend funktioniert optisch in dem Ausführungsbeispiel gezeigt in Fig. 1 bis 9 der Betriebsflüssigkeitsdetektor 1 wie folgt: Die Lichtquelle 2 strahlt Lichtstrahlen aLS aus, insbesondere in Richtung y. Lichtstrahlen aLS von der Lichtquelle 2 treffen auf die eine Umlenkungseinrichtung 5a. Die eine Umlenkungseinrichtung 5a lenkt Lichtstrahlen aLS von der Lichtquelle 2 zu der Betriebsflüssigkeitsleitung 3 um, insbesondere in Richtung x und/oder um 90 °. Insbesondere umgelenkte, Lichtstrahlen aLS von der Lichtquelle 2 treffen nicht-parallel, insbesondere orthogonal, zu der Betriebsflüssigkeitsleitung 3 auf die Betriebsflüssigkeitsleitung 3, insbesondere die Innenfläche 3I der Betriebsflüssigkeitsleitung 3.

Bei der Anwesenheit von Betriebsflüssigkeit BF in der Betriebsflüssigkeitsleitung 3 lenkt die Betriebsflüssigkeitsleitung 3, insbesondere die Innenfläche 3I, Lichtstrahlen aLS von der Lichtquelle 2 nicht ab, insbesondere bricht nicht, wie in Fig. 9 mittels durchgezogener Linien gezeigt. In anderen Worten: an der Innenfläche 3I bzw. Grenzfläche zwischen zwei Medien gleichen Brechungsindexes werden Lichtstrahlen aLS nicht gebrochen bzw. ändern nicht die Richtung. Insbesondere werden somit Lichtstrahlen aLS nicht aufgeweitet. Somit treffen viele, insbesondere nicht abgelenkte, Lichtstrahlen tLS von der Betriebsflüssigkeitsleitung 3 auf die andere Umlenkungseinrichtung 5b. Somit lenkt die andere Umlenkungseinrichtung 5b viele, insbesondere nicht abgelenkte, Lichtstrahlen tLS von der Betriebsflüssigkeitsleitung 3 zu dem Lichtempfänger 4 um, insbesondere in Richtung -y und/oder um 90 °. Somit empfängt der Lichtempfänger 4 viele, insbesondere nicht abgelenkte, Lichtstrahlen tLS von der Betriebsflüssigkeitsleitung 3. Somit misst der Lichtempfänger 4 eine große Intensität IT der empfangenen Lichtstrahlen eLS.

Bei der Abwesenheit von Betriebsflüssigkeit BF bzw. der Anwesenheit von Luft in der Betriebsflüssigkeitsleitung 3 lenkt die Betriebsflüssigkeitsleitung 3, insbesondere die Innenfläche 3I, Lichtstrahlen aLS von der Lichtquelle 2 ab, insbesondere bricht, insbesondere im Mittel um 10 °, wie in Fig. 9 mittels gestrichelter Linien gezeigt. In anderen Worten: an der Innenfläche 3I bzw. Grenzfläche zwischen zwei Medien verschiedenen Brechungsindexes werden Lichtstrahlen aLS gebrochen bzw. ändern die Richtung. Insbesondere werden somit Lichtstrahlen aLS aufgeweitet. Somit treffen wenige Lichtstrahlen tLS von der Betriebsflüssigkeitsleitung 3 auf die andere Umlenkungseinrichtung 5b. Somit lenkt die andere Umlenkungseinrichtung 5b wenige Lichtstrahlen tLS von der Betriebsflüssigkeitsleitung 3 zu dem Lichtempfänger 4 um. Somit empfängt der Lichtempfänger 4 wenige Lichtstrahlen tLS von der Betriebsflüssigkeitsleitung 3. Somit misst der Lichtempfänger 4 eine kleine Intensität IT der empfangenen Lichtstrahlen eLS.

Somit empfängt der Lichtempfänger 2 bei der Anwesenheit von Betriebsflüssigkeit BF in der Betriebsflüssigkeitsleitung 3 mehr Lichtstrahlen tLS von der Betriebsflüssigkeitsleitung 3 als bei der Abwesenheit von Betriebsflüssigkeit BF in der Betriebsflüssigkeitsleitung 3.

In dem nichterfindungsgemäßen Ausführungsbeispiel gezeigt in Fig. 10 funktioniert optisch der Betriebsflüssigkeitsdetektor 1 wie in dem Ausführungsbeispiel gezeigt in Fig. 1 bis 9 mit Ausnahme der Umlenkung/en, nämlich: Die Lichtquelle 2 strahlt Lichtstrahlen aLS aus, insbesondere in Richtung x. Lichtstrahlen aLS von der Lichtquelle 2 treffen nicht-parallel, insbesondere orthogonal, zu der Betriebsflüssigkeitsleitung 3 auf die Betriebsflüssigkeitsleitung 3, insbesondere die Innenfläche 3I der Betriebsflüssigkeitsleitung 3.

Bei der Anwesenheit von Betriebsflüssigkeit BF in der Betriebsflüssigkeitsleitung 3 lenkt die Betriebsflüssigkeitsleitung 3, insbesondere die Innenfläche 3I, Lichtstrahlen aLS von der Lichtquelle 2 nicht ab, insbesondere bricht nicht, wie in Fig. 10 mittels durchgezogener Linien gezeigt. Somit empfängt der Lichtempfänger 4 viele, insbesondere nicht abgelenkte, Lichtstrahlen tLS von der Betriebsflüssigkeitsleitung 3. Somit misst der Lichtempfänger 4 eine große Intensität IT der empfangenen Lichtstrahlen eLS.

Bei der Abwesenheit von Betriebsflüssigkeit BF bzw. der Anwesenheit von Luft in der Betriebsflüssigkeitsleitung 3 lenkt die Betriebsflüssigkeitsleitung 3, insbesondere die Innenfläche 3I, Lichtstrahlen aLS von der Lichtquelle 2 ab, insbesondere bricht, insbesondere im Mittel um 10 °, wie in Fig. 10 mittels gestrichelter Linien gezeigt. Somit empfängt der Lichtempfänger 4 wenige Lichtstrahlen tLS von der Betriebsflüssigkeitsleitung 3. Somit misst der Lichtempfänger 4 eine kleine Intensität IT der empfangenen Lichtstrahlen eLS.

Somit empfängt der Lichtempfänger 2 bei der Anwesenheit von Betriebsflüssigkeit BF in der Betriebsflüssigkeitsleitung 3 mehr Lichtstrahlen tLS von der Betriebsflüssigkeitsleitung 3 als bei der Abwesenheit von Betriebsflüssigkeit BF in der Betriebsflüssigkeitsleitung 3.

In den gezeigten Ausführungsbeispielen funktioniert elektrisch und/oder logisch der Betriebsflüssigkeitsdetektor 1, insbesondere die Ausgabeeinrichtung 6, wie folgt:
Bei Erreichung und/oder Überschreitung des Detektionsintensitätsgrenzwerts DGW durch die gemessene Intensität IT für die erste Mindestzeitdauer t1 gibt die Ausgabeeinrichtung 6 das Detektionssignal DS aus. Aber hat die Ausgabeeinrichtung 6 bisher ein anderes Signal, insbesondere das Nichtdetektionssignal NDS, ausgegeben und wird der Detektionsintensitätsgrenzwert DGW erreicht und/oder überschritten durch die gemessene Intensität IT nicht für die erste Mindestzeitdauer t1, sondern zeitlich kürzer, so gibt die Ausgabeeinrichtung 6 das andere Signal weiter aus.

Bei Unterschreitung des Nichtdetektionsintensitätsgrenzwerts NDGW und bei Erreichung und/oder Überschreitung des Fehlerintensitätsgrenzwerts FGW durch die gemessene Intensität IT für die zweite Mindestzeitdauer t2 gibt die Ausgabeeinrichtung 6 das Nichtdetektionssignal NDS aus. Aber hat die Ausgabeeinrichtung 6 bisher ein anderes Signal, insbesondere das Detektionssignal DS, ausgegeben und wird der Nichtdetektionsintensitätsgrenzwert NDGW unterschritten und der Fehlerintensitätsgrenzwert FGW erreicht und/oder überschritten durch die gemessene Intensität IT nicht für die zweite Mindestzeitdauer t2, sondern zeitlich kürzer, so gibt die Ausgabeeinrichtung 6 das andere Signal weiter aus.

Bei Unterschreitung des Fehlerintensitätsgrenzwerts FGW durch die gemessene Intensität IT gibt die Ausgabeeinrichtung 6 das Fehlersignal FS aus.

Fig. 12 und 13 zeigen ein erfindungsgemäßes handgeführtes Garten-, Forst- und/oder Baubearbeitungsgerät 50. Das Garten-, Forst- und/oder Baubearbeitungsgerät 50 weist einen Betriebsflüssigkeitstank 52, eine Betriebsflüssigkeitspumpe 53 und den optischen Betriebsflüssigkeitsdetektor 1 wie zuvor beschrieben auf. Der Betriebsflüssigkeitstank 52 ist zur Bevorratung von Betriebsflüssigkeit BF ausgebildet. Die Betriebsflüssigkeitspumpe 53 ist zur Förderung von Betriebsflüssigkeit BF aus dem Betriebsflüssigkeitstank 52 ausgebildet. Die Betriebsflüssigkeitsleitung 3 ist nach dem Betriebsflüssigkeitstank 52, und in dem Ausführungsbeispiel gezeigt in Fig. 12 vor die Betriebsflüssigkeitspumpe 53, geschaltet.

In alternativen Ausführungsbeispielen kann die Betriebsflüssigkeitsleitung nach die Betriebsflüssigkeitspumpe geschaltet sein.

In dem Ausführungsbeispiel gezeigt in Fig. 13 ist das Garten-, Forst- und/oder Baubearbeitungsgerät 50 eine Säge 50'.

In alternativen Ausführungsbeispielen kann das Garten-, Forst- und/oder Baubearbeitungsgerät ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer, eine Grasschere oder ein Reinigungsgerät sein.

Im Detail weist das Garten-, Forst- und/oder Baubearbeitungsgerät 50 ein Bearbeitungswerkzeug 51, in dem Ausführungsbeispiel gezeigt in Fig. 13 eine Sägekette 51', einen Antriebsmotor 54, eine Motorelektronik 55, ein benutzerbetätigbares Bedienelement 56 und eine Benutzer-Ausgabeeinrichtung 57, insbesondere eine Anzeige, auf.

Der Antriebsmotor 54 ist zum Antrieb des Bearbeitungswerkzeugs 51 und der Betriebsflüssigkeitspumpe 53 ausgebildet. Die Betriebsflüssigkeitspumpe 53 ist zur Förderung von Betriebsflüssigkeit BF zu dem Bearbeitungswerkzeug 51, insbesondere zur Schmierung des Bearbeitungswerkzeugs 51 mit Betriebsflüssigkeit BF in Form von Schmierflüssigkeit, ausgebildet.

Die Benutzer-Ausgabeeinrichtung 57 ist zur Ausgabe verschiedener benutzerwahrnehmbarer Signale bzw. Informationen in Abhängigkeit der Ausgabe der Ausgabeeinrichtung 6, insbesondere des Detektionssignals DS und des Nichtdetektionssignals NDS, insbesondere und des Fehlersignals FS, ausgebildet.

Im Detail ist die Benutzer-Ausgabeeinrichtung 57 mit der Ausgabeeinrichtung 6 wirkverbunden, insbesondere signalverbunden.

Wie die gezeigten und oben erläuterten Ausführungsbeispiele deutlich machen, stellt die Erfindung einen optischen Betriebsflüssigkeitsdetektor zur optischen Detektion von Betriebsflüssigkeit für ein handgeführtes Garten-, Forst- und/oder Baubearbeitungsgerät, wobei der Betriebsflüssigkeitsdetektor verbesserte Eigenschaften aufweist, und ein handgeführtes Garten-, Forst- und/oder Baubearbeitungsgerät aufweisend einen solchen optischen Betriebsflüssigkeitsdetektor bereit.

## Patentansprüche

1. Optischer Betriebsflüssigkeitsdetektor (1) zur optischen Detektion von Betriebsflüssigkeit (BF) für ein handgeführtes Garten-, Forst- und/oder Baubearbeitungsgerät (50), wobei der Betriebsflüssigkeitsdetektor (1) aufweist:
- eine Lichtquelle (2), wobei die Lichtquelle (2) zur Abstrahlung von Lichtstrahlen (aLS) ausgebildet ist,
- eine Betriebsflüssigkeitsleitung (3), wobei die Betriebsflüssigkeitsleitung (3) zur optischen Wechselwirkung von Lichtstrahlen (aLS) von der Lichtquelle (2) mit Betriebsflüssigkeit (BF) in der Betriebsflüssigkeitsleitung (3) zur optischen Detektion von Betriebsflüssigkeit (BF) ausgebildet ist,
- einen Lichtempfänger (4), wobei der Lichtempfänger (4) zum verschiedenen Empfang von Lichtstrahlen (tLS) von der Betriebsflüssigkeitsleitung (3) in Abhängigkeit von der Anwesenheit oder der Abwesenheit von Betriebsflüssigkeit (BF) in der Betriebsflüssigkeitsleitung (3) ausgebildet ist,
**dadurch gekennzeichnet,**
- **dass** der Betriebsflüssigkeitsdetektor (1) mindestens eine optische Umlenkungseinrichtung (5a, 5b) aufweist, wobei die mindestens eine Umlenkungseinrichtung (5a, 5b) zur Umlenkung von Lichtstrahlen (aLS) von der Lichtquelle (2) zu der Betriebsflüssigkeitsleitung (3) und/oder zur Umlenkung von Lichtstrahlen (tLS) von der Betriebsflüssigkeitsleitung (3) zu dem Lichtempfänger (4) ausgebildet ist, und
- **dass** die Betriebsflüssigkeitsleitung (3) zur verschiedenen Ablenkung von Lichtstrahlen (aLS) von der Lichtquelle (2) in Abhängigkeit von der Anwesenheit oder der Abwesenheit von Betriebsflüssigkeit (BF) in der Betriebsflüssigkeitsleitung (3) zur optischen Detektion von Betriebsflüssigkeit (BF) ausgebildet ist.

2. Optischer Betriebsflüssigkeitsdetektor (1) nach Anspruch 1, **dadurch gekennzeichnet,**
- **dass** die mindestens eine Umlenkungseinrichtung (5a, 5b) zur Umlenkung basierend auf Reflexion ausgebildet ist, insbesondere mindestens ein Spiegel (7a, 7b), insbesondere mindestens ein konkaver Spiegel, insbesondere mindestens ein Parabolspiegel, ist.

3. Optischer Betriebsflüssigkeitsdetektor (1) nach einem der vorhergehenden Ansprüche, **dadurch gekennzeichnet,**
- **dass** der Betriebsflüssigkeitsdetektor (1) einen optischen Körper (9) aufweist, wobei der Körper (9) die Betriebsflüssigkeitsleitung (3) und die mindestens eine Umlenkungseinrichtung (5a, 5b) aufweist.

4. Optischer Betriebsflüssigkeitsdetektor (1) nach Ansprüchen 2 und 3, **dadurch gekennzeichnet,**
- **dass** die mindestens eine Umlenkungseinrichtung (5a, 5b) an mindestens einer Stelle einer Oberfläche (9Oa, 9Ob) des Körpers (9) eine Reflexionsbeschichtung (10a, 10b) aufweist.

5. Optischer Betriebsflüssigkeitsdetektor (1) nach einem der vorhergehenden Ansprüche, **dadurch gekennzeichnet,**
- **dass** der Betriebsflüssigkeitsdetektor (1) eine Leiterplatte (11) aufweist, wobei die Leiterplatte (11) die Lichtquelle (2) und den Lichtempfänger (4), insbesondere und die Betriebsflüssigkeitsleitung (3), trägt, wobei die Lichtquelle (2) zur Abstrahlung von Lichtstrahlen (aLS), insbesondere orthogonal, von einer Plattenebene (11E) der Leiterplatte (11) weg ausgerichtet ist und wobei der Lichtempfänger (4) zum Empfang von Lichtstrahlen (tLS) von der Betriebsflüssigkeitsleitung (3), insbesondere orthogonal, zu der Plattenebene (11E) ausgerichtet ist.

6. Optischer Betriebsflüssigkeitsdetektor (1) nach einem der vorhergehenden Ansprüche, **dadurch gekennzeichnet,**
- **dass** die Betriebsflüssigkeitsleitung (3) derart ausgerichtet ist, dass Lichtstrahlen (aLS) von der Lichtquelle (2) nicht-parallel, insbesondere orthogonal, zu der Betriebsflüssigkeitsleitung (3) auf die Betriebsflüssigkeitsleitung (3), insbesondere eine Innenfläche (3I) der Betriebsflüssigkeitsleitung (3), treffen.

7. Optischer Betriebsflüssigkeitsdetektor (1) nach einem der vorhergehenden Ansprüche, **dadurch gekennzeichnet,**
- **dass** die Betriebsflüssigkeitsleitung (3), insbesondere eine Innenfläche (3I) der Betriebsflüssigkeitsleitung (3), zur verschiedenen Brechung von Lichtstrahlen (aLS) von der Lichtquelle (2) in Abhängigkeit von der Anwesenheit oder der Abwesenheit von Betriebsflüssigkeit (BF) in der Betriebsflüssigkeitsleitung (3) zur optischen Detektion von Betriebsflüssigkeit (BF) ausgebildet, insbesondere ausgerichtet und/oder geformt, ist.

8. Optischer Betriebsflüssigkeitsdetektor (1) nach Anspruch 7, **dadurch gekennzeichnet,**
- **dass** ein Brechungsindex (n3) der Betriebsflüssigkeitsleitung (3), insbesondere einer Wandung der Betriebsflüssigkeitsleitung (3), größer als 1 ist, insbesondere minimal 1,3 und/oder ähnlich einem Brechungsindex (nBF) von Betriebsflüssigkeit (BF).

9. Optischer Betriebsflüssigkeitsdetektor (1) nach einem der vorhergehenden Ansprüche, **dadurch gekennzeichnet,**
- **dass** der Betriebsflüssigkeitsdetektor (1) derart ausgebildet ist, dass der Lichtempfänger (4) bei der Anwesenheit von Betriebsflüssigkeit (BF) in der Betriebsflüssigkeitsleitung (3) mehr Lichtstrahlen (tLS) von der Betriebsflüssigkeitsleitung (3) empfängt als bei der Abwesenheit von Betriebsflüssigkeit (BF) in der Betriebsflüssigkeitsleitung (3).

10. Optischer Betriebsflüssigkeitsdetektor (1) nach einem der vorhergehenden Ansprüche, **dadurch gekennzeichnet,**
- **dass** der Lichtempfänger (4) zur Messung einer Intensität (IT) der empfangenen Lichtstrahlen (eLS) ausgebildet ist, und
- **dass** der Betriebsflüssigkeitsdetektor (1) eine Ausgabeeinrichtung (6) aufweist, wobei die Ausgabeeinrichtung (6) bei Erreichung und/oder Überschreitung eines Detektionsintensitätsgrenzwerts (DGW) durch die gemessene Intensität (IT) zur Ausgabe eines Detektionssignals (DS) und/oder bei Unterschreitung eines Nichtdetektionsintensitätsgrenzwerts (NDGW) durch die gemessene Intensität (IT) zur Ausgabe eines Nichtdetektionssignals (NDS) ausgebildet ist.

11. Optischer Betriebsflüssigkeitsdetektor (1) nach einem der vorhergehenden Ansprüche, **dadurch gekennzeichnet,**
- **dass** der Betriebsflüssigkeitsdetektor (1) eine Ausgabeeinrichtung (6) aufweist, wobei die Ausgabeeinrichtung (6) zur Ausgabe eines Detektionssignals (DS) bei Detektion von Betriebsflüssigkeit (BF) für eine erste Mindestzeitdauer (t1) und/oder zur Ausgabe eines Nichtdetektionssignals (NDS) bei Nichtdetektion von Betriebsflüssigkeit (BF) für eine zweite Mindestzeitdauer (t2) ausgebildet ist.

12. Optischer Betriebsflüssigkeitsdetektor (1) nach einem der vorhergehenden Ansprüche, **dadurch gekennzeichnet,**
- **dass** der Betriebsflüssigkeitsdetektor (1) derart ausgebildet ist, dass bei abstrahlender Lichtquelle (2) der Lichtempfänger (4) bei der Anwesenheit und bei der Abwesenheit von Betriebsflüssigkeit (BF) in der Betriebsflüssigkeitsleitung (3) Lichtstrahlen (tLS) empfängt, und
- **dass** der Betriebsflüssigkeitsdetektor (1) eine Ausgabeeinrichtung (6) aufweist, wobei die Ausgabeeinrichtung (6) bei Nichtempfang zur Ausgabe eines Fehlersignals (FS) ausgebildet ist.

13. Optischer Betriebsflüssigkeitsdetektor (1) nach einem der vorhergehenden Ansprüche, **dadurch gekennzeichnet,**
- **dass** die Betriebsflüssigkeitsleitung (3) gerade ist, insbesondere von einem Leitungseinlass (14) bis zu einem Leitungsauslass (15) der Betriebsflüssigkeitsleitung (3).

14. Optischer Betriebsflüssigkeitsdetektor (1) nach einem der vorhergehenden Ansprüche, insbesondere nach Anspruch 3 und/oder Anspruch 5 und/oder nach Anspruch 10 und/oder nach Anspruch 11 und/oder Anspruch 12, **dadurch gekennzeichnet,**
- **dass** der Betriebsflüssigkeitsdetektor (1) eine Abdichtungsmasse (20) aufweist, wobei die Abdichtungsmasse (20) die Lichtquelle (2) und/oder den Lichtempfänger (4) und/oder die mindestens eine Umlenkungseinrichtung (5a, 5b), insbesondere den Körper (9), und/oder die Leiterplatte (11) und/oder die Ausgabeeinrichtung (6) schützt.

15. Handgeführtes Garten-, Forst- und/oder Baubearbeitungsgerät (50), **dadurch gekennzeichnet, dass** das Garten-, Forst- und/oder Baubearbeitungsgerät (50) aufweist:
- einen Betriebsflüssigkeitstank (52), wobei der Betriebsflüssigkeitstank (52) zur Bevorratung von Betriebsflüssigkeit (BF) ausgebildet ist,
- eine Betriebsflüssigkeitspumpe (53), wobei die Betriebsflüssigkeitspumpe (53) zur Förderung von Betriebsflüssigkeit (BF) aus dem Betriebsflüssigkeitstank (52) ausgebildet ist, und
- einen optischen Betriebsflüssigkeitsdetektor (1) nach einem der vorhergehenden Ansprüche, wobei die Betriebsflüssigkeitsleitung (3) nach dem Betriebsflüssigkeitstank (52), insbesondere und vor oder nach die Betriebsflüssigkeitspumpe (53), geschaltet ist.

## Claims

1. Optical operating fluid detector (1) for the optical detection of operating fluid (BF) for a hand-guided garden, forestry and/or construction machining appliance (50), the operating fluid detector (1) having:
- a light source (2), the light source (2) being designed for the radiation of rays of light (aLS),
- an operating fluid line (3), the operating fluid line (3) being designed for the optical interaction of rays of light (aLS) from the light source (2) with operating fluid (BF) in the operating fluid line (3) for the optical detection of operating fluid (BF),
- a light receiver (4), the light receiver (4) being designed for the differing reception of rays of light (tLS) from the operating fluid line (3) in dependence on the presence or the absence of operating fluid (BF) in the operating fluid line (3),
**characterized**
- **in that** the operating fluid detector (1) has at least one optical deflecting device (5a, 5b), the at least one deflecting device (5a, 5b) being designed for the deflection of rays of light (aLS) from the light source (2) to the operating fluid line (3) and/or for the deflection of rays of light (tLS) from the operating fluid line (3) to the light receiver (4), and
- **in that** the operating fluid line (3) is designed for the differing diversion of rays of light (aLS) from the light source (2) in dependence on the presence or the absence of operating fluid (BF) in the operating fluid line (3) for the optical detection of operating fluid (BF).

2. Optical operating fluid detector (1) according to Claim 1, **characterized**
- **in that** the at least one deflecting device (5a, 5b) is designed for deflection on the basis of reflection, is in particular at least one mirror (7a, 7b), in particular at least one concave mirror, in particular at least one parabolic mirror.

3. Optical operating fluid detector (1) according to one of the preceding claims, **characterized**
- **in that** the operating fluid detector (1) has an optical body (9), the body (9) having the operating fluid line (3) and the at least one deflecting device (5a, 5b) .

4. Optical operating fluid detector (1) according to Claims 2 and 3, **characterized**
- **in that** the at least one deflecting device (5a, 5b) has at at least one point of a surface (9Oa, 9Ob) of the body (9) a reflection coating (10a, 10b).

5. Optical operating fluid detector (1) according to one of the preceding claims, **characterized**
- **in that** the operating fluid detector (1) has a printed circuit board (11), the printed circuit board (11) carrying the light source (2) and the light receiver (4), in particular and the operating fluid line (3), the light source (2) being aligned for the radiation of rays of light (aLS), in particular orthogonally, away from a board plane (11E) of the printed circuit board (11) and the light receiver (4) being aligned for the reception of rays of light (tLS) from the operating fluid line (3), in particular orthogonally, towards the board plane (11E) .

6. Optical operating fluid detector (1) according to one of the preceding claims, **characterized**
- **in that** the operating fluid line (3) is aligned in such a way that rays of light (aLS) from the light source (2) impinge on the operating fluid line (3), in particular an inner surface (31) of the operating fluid line (3), non-parallel, in particular orthogonally, in relation to the operating fluid line (3) .

7. Optical operating fluid detector (1) according to one of the preceding claims, **characterized**
- **in that** the operating fluid line (3), in particular an inner surface (31) of the operating fluid line (3), is designed, in particular aligned and/or formed, for the differing refraction of rays of light (aLS) from the light source (2) in dependence on the presence or the absence of operating fluid (BF) in the operating fluid line (3) for the optical detection of operating fluid (BF).

8. Optical operating fluid detector (1) according to Claim 7, **characterized**
- **in that** a refractive index (n3) of the operating fluid line (3), in particular a wall of the operating fluid line (3), is greater than 1, in particular, as a minimum, 1.3, and/or similar to a refractive index (nBF) of operating fluid (BF).

9. Optical operating fluid detector (1) according to one of the preceding claims, **characterized**
- **in that** the operating fluid detector (1) is designed in such a way that the light receiver (4) receives more rays of light (tLS) from the operating fluid line (3) in the case of the presence of operating fluid (BF) in the operating fluid line (3) than in the case of the absence of operating fluid (BF) in the operating fluid line (3).

10. Optical operating fluid detector (1) according to one of the preceding claims, **characterized**
- **in that** the light receiver (4) is designed for the measurement of an intensity (IT) of the received rays of light (eLS), and
- **in that** the operating fluid detector (1) has an output device (6), the output device (6) being designed for the output of a detection signal (DS) when a detection intensity limit value (DGW) is reached and/or overshot by the measured intensity (IT) and/or for the output of a non-detection signal (NDS) when a non-detection intensity limit value (NDGW) is undershot by the measured intensity (IT).

11. Optical operating fluid detector (1) according to one of the preceding claims, **characterized**
- **in that** the operating fluid detector (1) has an output device (6), the output device (6) being designed for the output of a detection signal (DS) when there is detection of operating fluid (BF) for a first minimum time period (t1) and/or for the output of a non-detection signal (NDS) when there is non-detection of operating fluid (BF) for a second minimum time period (t2).

12. Optical operating fluid detector (1) according to one of the preceding claims, **characterized**
- **in that** the operating fluid detector (1) is designed in such a way that, with a radiating light source (2), the light receiver (4) receives rays of light (tLS) in the case of the presence and in the case of the absence of operating fluid (BF) in the operating fluid line (3), and
- **in that** the operating fluid detector (1) has an output device (6), the output device (6) being designed for the output of a fault signal (FS) in the case of non-reception.

13. Optical operating fluid detector (1) according to one of the preceding claims, **characterized**
- **in that** the operating fluid line (3) is straight, in particular from a line inlet (14) up to a line outlet (15) of the operating fluid line (3).

14. Optical operating fluid detector (1) according to one of the preceding claims, in particular according to Claim 3 and/or Claim 5 and/or according to Claim 10 and/or according to Claim 11 and/or Claim 12, **characterized**
- **in that** the operating fluid detector (1) has a sealing compound (20), the sealing compound (20) protecting the light source (2) and/or the light receiver (4) and/or the at least one deflecting device (5a, 5b), in particular the body (9), and/or the printed circuit board (11) and/or the output device (6).

15. Hand-guided garden, forestry and/or construction machining appliance (50), **characterized in that** the garden, forestry and/or construction machining appliance (50) has:
- an operating fluid tank (52), the operating fluid tank (52) being designed for the storage of operating fluid (BF),
- an operating fluid pump (53), the operating fluid pump (53) being designed for the delivery of operating fluid (BF) from the operating fluid tank (52), and
- an optical operating fluid detector (1) according to one of the preceding claims, the operating fluid line (3) being connected downstream of the operating fluid tank (52), in particular and upstream or downstream of the operating fluid pump (53).

## Revendications

1. Détecteur optique de liquide de travail (1) destiné à détecter optiquement un liquide de travail (BF) destiné à un dispositif à main de jardinage, de sylviculture et/ou de construction (50), le détecteur de liquide de travail (1) comportant :
- une source de lumière (2), la source de lumière (2) étant conçue pour émettre des faisceaux lumineux (aLS),
- une conduite de liquide de travail (3), la conduite de liquide de travail (3) étant conçue pour que des faisceaux lumineux (aLS) provenant de la source de lumière (2) interagissent optiquement avec le liquide de travail (BF) dans la conduite de liquide de travail (3) afin de détecter optiquement le liquide de travail (BF),
- un récepteur de lumière (4), le récepteur de lumière (4) étant conçu pour recevoir différemment des faisceaux lumineux (tLS) provenant de la conduite de liquide de travail (3) en fonction de la présence ou de l'absence de liquide de travail (BF) dans la conduite de liquide de travail (3),
**caractérisé en ce que**
- le détecteur de liquide de travail (1) comporte au moins un dispositif de déviation optique (5a, 5b), l'au moins un dispositif de déviation (5a, 5b) étant conçu pour dévier les faisceaux lumineux (aLS) provenant de la source de lumière (2) vers la conduite de liquide de travail (3) et/ou pour dévier les faisceaux lumineux (tLS) provenant de la conduite de liquide de travail (3) vers le récepteur de lumière (4), et
- la conduite de liquide de travail (3) est conçue pour dévier différemment des faisceaux lumineux (aLS) provenant de la source de lumière (2) en fonction de la présence ou de l'absence de liquide de travail (BF) dans la conduite de liquide de travail (3) afin de détecter optiquement le liquide de travail (BF).

2. Détecteur optique de liquide de travail (1) selon la revendication 1, **caractérisé en ce que**
- l'au moins un dispositif de déviation (5a, 5b) est conçu pour effectuer une déviation par réflexion, en particulier sous la forme d'au moins un miroir (7a, 7b), en particulier d'au moins un miroir concave, en particulier d'au moins un miroir parabolique.

3. Détecteur optique de liquide à travail (1) selon l'une des revendications précédentes, **caractérisé en ce que**
- le détecteur de liquide de travail (1) comporte un corps optique (9), le corps (9) comportant la conduite de liquide de travail (3) et l'au moins un dispositif de déviation (5a, 5b).

4. Détecteur optique de liquide de travail (1) selon les revendications 2 et 3, **caractérisé en ce que**
- l'au moins un dispositif de déviation (5a, 5b) comporte un revêtement réfléchissant (10a, 10b) en au moins un endroit d'une surface (9Oa, 9Ob) du corps (9).

5. Détecteur optique de liquide de travail (1) selon l'une des revendications précédentes, **caractérisé en ce que**
- le détecteur de liquide de travail (1) comporte une carte de circuit imprimé (11), la carte de circuit imprimé (11) portant en particulier la source de lumière (2) et le récepteur de lumière (4), et notamment la conduite de liquide de travail (3), la source de lumière (2) étant orientée à l'opposé d'un plan de carte (11E) de la carte de circuit imprimé (11) de manière à émettre des faisceaux lumineux (aLS), en particulier orthogonalement, et le récepteur de lumière (4) étant orienté de manière à recevoir des faisceaux lumineux (tLS) provenant de la conduite de liquide de travail (3), en particulier orthogonalement, au plan de carte (11E).

6. Détecteur optique de liquide de travail (1) selon l'une des revendications précédentes, **caractérisé en ce que**
- la conduite de liquide de travail (3) est orientée de manière que les rayons lumineux (aLS) provenant de la source de lumière (2) soient incidents à la conduite de liquide de travail (3), en particulier à une surface intérieure (31) de la conduite de liquide de travail (3) de manière non-parallèle, en particulier orthogonalement, par rapport à la conduite de liquide de travail (3).

7. Détecteur optique de liquide de travail (1) selon l'une des revendications précédentes, **caractérisé en ce que**
- la conduite de liquide de travail (3), en particulier une surface intérieure (31) de la conduite de liquide de travail (3), est conçue, en particulier orientée et/ou formée, pour réfracter différemment des rayons lumineux (aLS) provenant de la source de lumière (2) en fonction de la présence ou de l'absence de liquide de travail (BF) dans la conduite de liquide de travail (3) de manière à détecter optiquement le liquide de travail (BF).

8. Détecteur optique de liquide de travail (1) selon la revendication 7, **caractérisé en ce que**
- l'indice de réfraction (n3) de la conduite de liquide de travail (3), en particulier d'une paroi de la conduite de liquide de travail (3), est supérieur à 1, en particulier est au minimum de 1,3 et/ou est similaire à un indice de réfraction (nBF) du liquide de travail (BF).

9. Détecteur optique de liquide de travail (1) selon l'une des revendications précédentes, **caractérisé en ce que**
- le détecteur de liquide de travail (1) est conçu de manière que le récepteur de lumière (4) reçoit davantage de faisceaux lumineux (tLS) provenant de la conduite de liquide de travail (3) en présence de liquide de travail (BF) dans la conduite de liquide de travail (3) qu'en l'absence de liquide de travail (BF) dans la conduite de liquide de travail (3).

10. Détecteur optique de liquide de travail (1) selon l'une des revendications précédentes, **caractérisé en ce que**
- le récepteur de lumière (4) est conçu pour mesurer une intensité (IT) des faisceaux lumineux reçus (eLS), et
- le détecteur de liquide de travail (1) comporte un dispositif de sortie (6), le dispositif de sortie (6) étant conçu pour émettre un signal de détection (DS) lorsque l'intensité mesurée (IT) atteint et/ou dépasse une valeur limite d'intensité de détection (DGW) et/ou pour délivrer un signal de non-détection (NDS) lorsque l'intensité mesurée (IT) est inférieure à une intensité de non-détection (NDGW).

11. Détecteur optique de liquide de travail (1) selon l'une des revendications précédentes, **caractérisé en ce que**
- le détecteur de liquide de travail (1) comporte un dispositif de sortie (6), le dispositif de sortie (6) étant conçu pour émettre un signal de détection (DS) lorsque le liquide de travail (BF) est détecté pendant une première durée minimale (t1) et/ou pour émettre un signal de non-détection (NDS) lorsque le liquide de travail (BF) n'est pas détecté pendant une deuxième durée minimale (t2).

12. Détecteur optique de liquide de travail (1) selon l'une des revendications précédentes, **caractérisé en ce que**
- le détecteur de liquide de travail (1) est conçu de manière que, lorsque la source de lumière (2) émet, le récepteur de lumière (4) reçoit des faisceaux lumineux (tLS) en présence et en l'absence de liquide de travail (BF) dans la conduite de liquide de fonction (3), et
- le détecteur de liquide de travail (1) comporte un dispositif de sortie (6), le dispositif de sortie (6) étant conçu pour émettre un signal d'erreur (FS) en cas de non-réception.

13. Détecteur optique de liquide de travail (1) selon l'une des revendications précédentes, **caractérisé en ce que**
- la conduite de liquide de travail (3) est rectiligne, en particulier depuis une entrée de conduite (14) jusqu'à une sortie de conduite (15) de la conduite de liquide de travail (3).

14. Détecteur optique de liquide de travail (1) selon l'une des revendications précédentes, notamment selon la revendication 3 et/ou la revendication 5 et/ou selon la revendication 10 et/ou selon la revendication 11 et/ou la revendication 12, **caractérisé en ce que**
- le détecteur de liquide de travail (1) comporte une matière d'étanchéité (20), la matière d'étanchéité (20) protégeant la source de lumière (2) et/ou le récepteur de lumière (4) et/ou l'au moins un dispositif de déviation (5a, 5b), en particulier le corps (9), et/ou la carte de circuit imprimé (11) et/ou le dispositif de sortie (6).

15. Dispositif à main de jardinage, de sylviculture et/ou de construction (50), **caractérisé en ce que** le dispositif de jardinage, de sylviculture et/ou de construction (50) comporte :
- un réservoir de liquide de travail (52), le réservoir de liquide de travail (52) étant conçu pour stocker du liquide de travail (BF),
- une pompe à liquide de travail (53), la pompe à liquide de travail (53) étant conçue pour transporter le liquide de travail (BF) depuis le réservoir de liquide de travail (52), et
- un détecteur optique de liquide de travail (1) selon l'une des revendications précédentes, la conduite de liquide de travail (3) étant raccordée après le réservoir de liquide de travail (52), et en particulier avant ou après la pompe à liquide de travail (53).
